# EUROPEAN PATENT SPECIFICATION

(11) **EP 1 139 195 B1**
(45) Date of publication and mention of the grant of the patent: **15.02.2006**
(21) Application number: 01107575.1
(22) Date of filing: 27.03.2001
(51) Int. Cl.: G05G 1/14, B60T 7/06

(54) **An accelerator and brake pedal device for a motor vehicle**
Fahr- und Bremspedal für ein Kraftfahrzeug
Pédale d'accélérateur et pédale de frein pour véhicule automobile

(30) Priority: 28.03.2000 IT TO000051 U
(43) Date of publication of application: 04.10.2001
(73) Proprietor: FIAT AUTO S.p.A., 10135 Torino (IT)
(72) Inventor: Robinson, Michael, 10040 Cumiana (Torino) (IT)
(74) Representative: Fioravanti, Corrado

(56) References cited:
- DE-A- 19 811 268
- DE-U- 9 206 865
- GB-A- 1 475 290
- US-A- 2 860 720
- US-A- 5 115 162

## Description

The present invention relates to a pedal device for controlling the accelerator and the brakes of a motor vehicle.

It is known that conventional pedal devices for controlling a vehicle's accelerator and brakes generally include a plurality of separate movable pedals, each of which controls a respective function, either accelerating or braking the vehicle.

The object of the present invention is to provide a structurally simplified pedal device which is economical to manufacture and which does not require the driver's foot to move in order to operate the desired function.

This object is achieved, according to the invention, by providing a pedal device having the characteristics defined in Claim 1. Preferred characteristics of the invention are claimed in the dependent Claims.

Characteristics and advantages of the invention will become apparent from the detailed description of one embodiment thereof, provided with reference to the drawings, given by way of non-limitative example, in which:
Figure 1 is a longitudinally sectioned schematic view of a motor vehicle fitted with a pedal according to the invention; and
Figure 2 is a schematic perspective view of a pedal according to the invention.

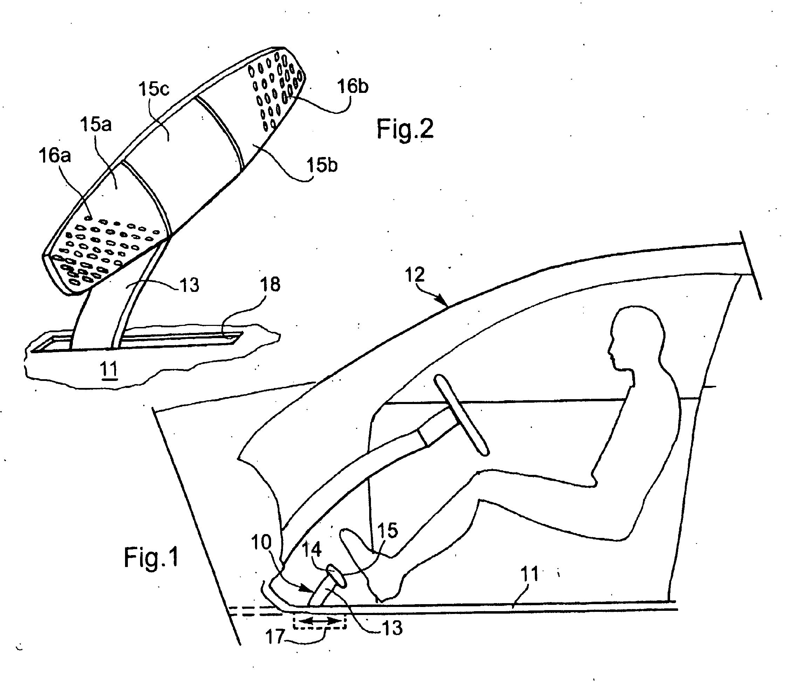

With reference first to Figure 1, a pedal device according to the invention, generally indicated 10, projects from the floor 11 of a motor vehicle 12.

The pedal device 10 includes an essentially vertical support element 13, with a transversely elongate plate element 14 fixed to the top thereof.

As used here, the terms "transverse" and "longitudinal" should be considered with reference to the longitudinal axis of the vehicle, unless otherwise specified.

With reference also to Figure 2, the plate 14 has a surface generally indicated 15 which faces the driver.

The surface 15 is divided into three areas aligned transverse the vehicle:
- a first end area 15a, bearing a plurality of electric pressure sensors 16a for controlling braking;
- a second end area 15b bearing a second plurality of electric pressure sensors 16b for controlling the accelerator; and
- an intermediate surface area 15c with no sensors, which serves as a footrest and separates the two sensor-fitted areas 15a, 15b.

The electric sensors 16a, 16b are electrically connected to one or more electronic control units (not shown) for selectively activating the respective braking and acceleration functions. The sensors, which are of a type known per se, are operable to transmit electrical signals indicating that pressure has been exerted on one of them, in order to activate the required function with an intensity substantially proportional to the pressure exerted on the sensor.

The sensors could be of various types known in the art: a piezo-resistive, inductive or capacitive type, for example.

The device 10 is fixed in use; however, in a preferred embodiment, the structure 10 has adjustment means for adjusting the working position of the pedal longitudinally. These adjustment means, which are not described in detail here, are schematically indicated 17 in Figure 1 and are fitted beneath the floor 11 of the vehicle 12. By acting on the longitudinal adjustment means 17, for example by means of controls (not illustrated) inside the driving compartment, the driver is able to move the pedal 10 backwards or forwards according to his height and preferred driving position.

In the embodiment illustrated in Figure. 2, the vertical support 13 of the pedal device can slide in a longitudinal slot 18 in the floor of the vehicle.

Naturally, the principle of the invention remaining unchanged, embodiments and manufacturing details may be varied widely from those described and illustrated purely by way of non-limitative example, without departing thereby from the scope of the invention. For example, the pedal 10 could be fixed to the floor of the vehicle or, alternatively, in a case where longitudinal adjustment means are provided, these could be incorporated into the floor or mounted on the upper surface thereof, preferably in a position which would not get in the way of the driver's legs.

## Claims

1. A pedal device for controlling the accelerator and the brakes of a motor vehicle, **characterised in that** it includes:
- a structure (10), which is fixed in use, having a surface (15) facing the driver;
- first and second electric pressure sensors (16a, 16b), arranged at least in respective opposite end regions (15a, 15b) of the said surface (15) for controlling the accelerator and the brakes respectively, operable to transmit electric signals indicative of the pressure exerted thereon; and
- an intermediate area (15c) serving as a footrest and separating the said end regions (15a, 15b).

2. A pedal device according to Claim 1, **characterised in that** the said surface (15) is elongate along a substantially transverse direction.

3. A pedal device according to Claim 1, **characterised in that** adjustment means (17) are associated with the said structure (10), operable to vary the working position of the pedal along a substantially longitudinal direction.

4. A pedal device according to Claim 3, **characterised in that** the said adjustment means (17) are fitted under the floor (11) of the vehicle.

5. A pedal device according to Claim 4, **characterised in that** the said structure (10) also includes a substantially vertical support element (13) which is movable longitudinally along a longitudinal slot (18) in the floor (11) of the vehicle (12) as a result of activation of the adjustment means (17).

## Patentansprüche

1. Pedalvorrichtung zum Steuern des Gaspedals und der Bremsen eines Kraftfahrzeugs, **dadurch gekennzeichnet, dass** sie Folgendes umfasst:
- eine Struktur (10), die bei Verwendung fixiert ist und eine dem Fahrer zugewandte Fläche (15) aufweist;
- erste und zweite elektrische Drucksensoren (16a, 16b) zum Steuern des Gaspedals bzw. der Bremsen, welche Drucksensoren zumindest in jeweils gegenüberliegenden Endbereichen (15a, 15b) der Fläche (15) angeordnet sind und dazu betriebsfähig sind, elektrische Signale zu übermitteln, welche für den darauf ausgeübten Druck indikativ sind; und
- einen Zwischenbereich (15c), der als Fußstütze dient und die Endbereiche (15a, 15b) trennt.

2. Pedalvorrichtung gemäß Anspruch 1, **dadurch gekennzeichnet, dass** die Fläche (15) entlang einer im Wesentlichen quer verlaufenden Richtung verlängert ist.

3. Pedalvorrichtung gemäß Anspruch 1, **dadurch gekennzeichnet, dass** der Struktur (10) Einstellmittel (17) zugeordnet sind, welche dazu betriebsfähig sind, die Arbeitsstellung des Pedals entlang einer im Wesentlichen längs verlaufenden Richtung zu variieren.

4. Pedalvorrichtung gemäß Anspruch 3, **dadurch gekennzeichnet, dass** die Einstellmittel (17) unter dem Boden (11) des Fahrzeugs befestigt sind.

5. Pedalvorrichtung gemäß Anspruch 4, **dadurch gekennzeichnet, dass** die Struktur (10) ebenso ein im Wesentlichen vertikales Stützelement (13) umfasst, das infolge einer Aktivierung der Einstellmittel (17) entlang eines Längsschlitzes (18) im Boden (11) des Fahrzeugs (12) in Längsrichtung bewegbar ist.

## Revendications

1. Mécanisme de pédale pour commander l'accélérateur et les freins d'un véhicule à moteur, **caractérisé en ce qu'**il inclut :
-- une structure (10), qui est fixée en utilisation, ayant une surface (15) face au conducteur ;
-- un premier et un second capteur de pression électrique (16a, 16b), agencés au moins dans des régions terminales opposées respectives (15a, 15b) de ladite surface (15) pour commander l'accélérateur et les freins respectivement, susceptibles de fonctionner pour transmettre des signaux électriques indiquant la pression exercée sur ceux-ci ; et
-- une zone intermédiaire (15c) servant d'appui-pied et séparant lesdites régions terminales (15a, 15b).

2. Mécanisme de pédale selon la revendication 1, **caractérisé en ce que** ladite surface (15) est allongée le long d'une direction sensiblement transversale.

3. Mécanisme de pédale selon la revendication 1, **caractérisé en ce que** des moyens d'ajustement (17) sont associés à ladite structure (10), susceptibles de fonctionner pour faire varier la position de travail de la pédale le long d'une direction sensiblement longitudinale.

4. Mécanisme de pédale selon la revendication 3, **caractérisé en ce que** lesdits moyens d'ajustement (17) sont montés au-dessous du plancher (11) du véhicule.

5. Mécanisme de pédale selon la revendication 4, **caractérisé en ce que** ladite structure (10) inclut un élément de support sensiblement vertical (13) qui est mobile longitudinalement le long d'une fente longitudinale (18) dans le plancher (11) du véhicule (12) en résultat de l'activation des moyens d'ajustement (17).
